# FASCICULE DE BREVET EUROPEEN

(11) **EP 3 212 897 B1**
(45) Date de publication et mention de la délivrance du brevet: **18.07.2018**
(21) Numéro de dépôt: 15804165.7
(22) Date de dépôt: 22.10.2015
(51) Int. Cl.: F01D 11/16, F16J 15/16, F16J 15/44, F01D 5/22, F01D 11/12

(54) **AUBE DE ROTOR, ENSEMBLE TOURNANT ET PROCÉDÉS DE FONCTIONNEMENT ASSOCIÉS**
LAUFSCHAUFEL, ZUGEHÖRIGE DREHENDE BAUGRUPPE UND BETRIEBSVERFAHREN
ROTOR BLADE, CORRESPONDING ROTATING ASSEMBLY AND OPERATING METHODS

(30) Priorité: 28.10.2014 FR 1460356
(43) Date de publication de la demande: 06.09.2017
(73) Titulaire: SAFRAN AIRCRAFT ENGINES, 75015 Paris (FR)
(72) Inventeur: DURAND, Didier, Noël, 77550 Moissy Cramayel (FR); BAUMAS, Olivier, Jean, Daniel, 77550 Moissy Cramayel (FR); DELAPORTE, Nicolas, Daniel, 77550 Moissy Cramayel (FR)
(74) Mandataire: Pichat, Thierry
(86) Numéro de dépôt international: PCT/FR2015/052844
(87) Numéro de publication internationale: WO 2016/066932

(56) Documents cités:
- EP-A2- 2 182 174
- DE-A1-102004 050 739
- US-A1- 2005 058 539
- US-A1- 2009 252 602

## Description

L'invention se rapporte à une aube de rotor pour une turbomachine aéronautique, un ensemble tournant pour turbomachine comprenant une série de telles aubes, un procédé de fonctionnement d'un tel ensemble tournant, ainsi qu'un procédé de réalisation de l'aube.

La turbomachine privilégiée est un turboréacteur d'avion.

EP0708227 illustre un état de la technique et pose bien les diverses problématiques possibles relative à l'étanchéité des aubes de rotor de turbomachine.

Ainsi, pour assurer des performances maximales dans les turbomachines aéronautiques, il est indispensable de limiter au maximum les fuites de gaz entre nombres d'éléments fixes et d'éléments rotatifs de ces turbomachines.

EP2182174 divulgue un contrôleur de jeu où une extrémité d'une aube porte un joint fixe. Un joint articulé, lié avec le carter extérieur qui entoure les aubes, peut venir au contact du joint fixe par une liaison mécanique mobile comprenant une articulation.

DE102004050739 divulgue une aube de rotor de turbomachine dont une extrémité porte un élément de joint d'étanchéité lié avec une zone de la tête de pale par une liaison mécanique mobile radialement en translation.

Dans le présent mémoire, tout comme dans le domaine technique concerné, les termes amont AM et aval AV sont définis de sorte que l'amont se trouve axialement du côté d'où provient le flux d'écoulement général de la turbomachine, et l'aval se trouve axialement du côté vers lequel s'écoule ce même flux. Et les termes " intérieur " et " extérieur " sont définis radialement par rapport à l'axe autour duquel tournent les éléments rotatifs précités (axe 7 ci-après), « axial » et « radial » étant définis par rapport à ce même axe 7.

Schématiquement, le long de l'axe précité et d'amont vers l'aval, une turbomachine de moteur d'avion comporte souvent une soufflante, un compresseur basse pression, un compresseur haute pression, une chambre de combustion, puis des turbines, successivement haute pression et basse pression.

En particulier les turbines comprennent chacune une partie fixe, ou stator, et une partie rotative autour d'un axe central longitudinal, définissant un rotor lui aussi pourvu d'aubes.

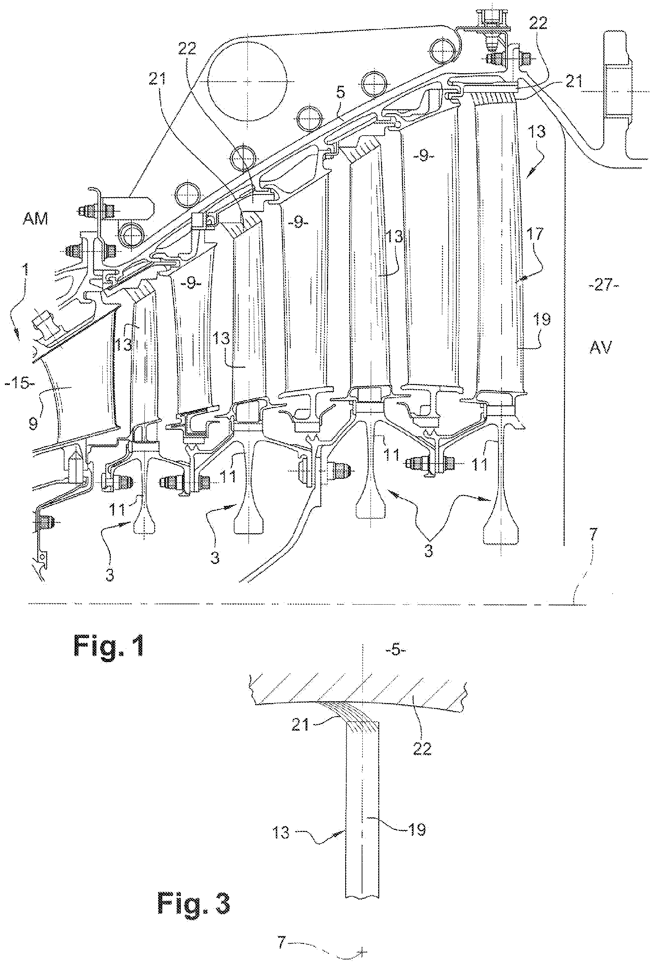

Ainsi, comme connu, la turbine basse pression 1 de turboréacteur ou turbopropulseur de la figure 1 comprend plusieurs roues 3 de turbine qui sont disposées en série à l'intérieur d'un carter extérieur 5 et tournent autour d'un axe central 7 de la turbomachine, en aval d'un distributeur annulaire fixe 9, pourvu d'une série d'aubes fixes. Chaque roue 3 comprend un disque 11 portant à sa périphérie externe des aubes mobiles 13.

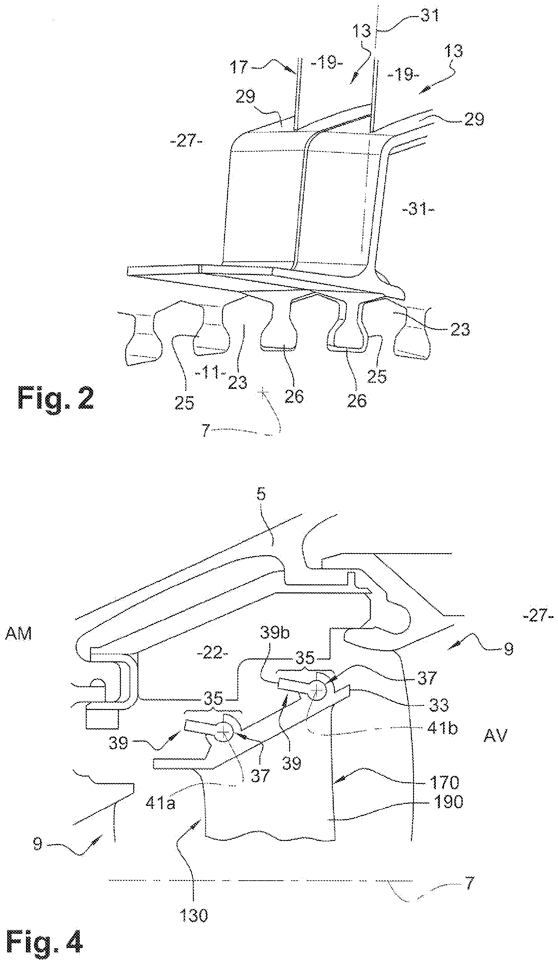

Comme on le voit mieux figure 2 qui illustre aussi l'art antérieur, chaque disque 11 comprend à sa périphérie externe des dents 23 disposées en alternance avec des rainures, ou alvéoles, 25 dans lesquelles sont engagés axialement et retenus radialement des pieds d'aubes 26, les aubes s'étendant radialement depuis les alvéoles 25 dans une veine annulaire d'écoulement 27 d'un flux de gaz chaud issu de la chambre de combustion 15.

Plus précisément, chaque corps 17 d'aube présente radialement, depuis l'extérieur vers l'intérieur, une pale 19, une plate-forme 29 s'étendant sensiblement perpendiculairement par rapport à l'axe 31 d'allongement de l'aube, et une échasse 31 reliant la plate-forme au pied d'aube 26. Les pieds d'aube sont retenus radialement dans les alvéoles 25. Les plates-formes 29 sont agencées circonférentiellement bout à bout de manière à définir ensemble la limite interne de référence du flux d'écoulement des gaz chauds circulant dans la turbine.

Comme présenté antérieurement dans EP0708227, chaque aube 13 peut être constituée d'un tissu de fibres dont la portion qui est hors de l'aube constitue une brosse (ou joint brosse) 21.

Lorsque l'aube 6 est en rotation, la brosse 21 vient frotter sur la piste du carter 5, lequel carter définit une enveloppe circonférentielle fixe, en une ou plusieurs parties, autour des aubes.

Pour favoriser l'étanchéité comme schématisé figure 3, une série de blocs 22 en matériau abradable fixés intérieurement au carter 5 peut radialement faire face aux joints brosse 21, au-delà de leur périphérie extérieure.

L'invention ici présentée est une alternative notamment à une telle solution connue à brosses qu'il peut être difficile de mettre en oeuvre industriellement, d'autant que, dans le cas particulier des turbines basse pression, les contraintes thermiques sont sources de difficultés supplémentaires. En effet, se pose le problème de la résistance à la température des brosses dont les matériaux sont problématiques à choisir.

Le problème de la prévision de l'usure entre les deux parties en contact et de la maintenance a également été pris en compte.

Vis-à-vis de EP2182174 et DE102004050739 a également pris en compte la facilité :
- de montage de l'aube,
- et de réalisation d'une solution qui soit pratique en termes de mise en oeuvre et/ou de maintenance.

Aussi est-il proposé que l'aube de rotor concernée, qui comprend un corps définissant localement une pale présentant à une extrémité radialement externe une tête de pale, comprenne en outre au moins un élément de joint (d'étanchéité) lié avec une zone de la tête de pale par une liaison mécanique mobile entre une position de repos et une position active dans laquelle l'élément de joint fait radialement saillie de la tête d'aube, la liaison mécanique mobile comprenant une articulation.

Ainsi, l'élément de joint pourra s'échapper en cas d'effort radial excessif, évitant ainsi tant une usure inappropriée du matériau contre lequel il vient sinon porter et/ou un endommagement de l'élément de joint lui-même.

Qu'en particulier la liaison mécanique mobile comprenne une liaison pivot, de préférence libre, en tant qu'articulation, permettra une « auto-adaptation » que l'aube soit en rotation autour de l'axe 7, ou au repos.

Pour faciliter et sécuriser la réalisation d'une telle aube, il est conseillé que la tête de pale définisse un talon, ce talon étant intégré à la pale de fabrication, ou rapporté et fixé à elle. De façon connue, un talon est une sorte de petite plateforme qui forme un rebord autour de l'extrémité extérieure de la pale. Typiquement, placés côte-à-côte circonférentiellement autour de l'ensemble des aubes fixées par leurs pieds au disque central qui entraîne ces aubes, les talons définissent ensemble une limite extérieure pour la veine de flux gazeux qui passe entre les pales.

Encore pour favoriser la maîtrise de l'usure entre les deux parties en contact et donc la maintenance, il est aussi conseillé que l'élément de joint mobile soit en matériau composite.

Structurellement, on recommande par ailleurs que, pour ladite liaison mécanique mobile :
- l'élément de joint présente une base et la tête de pale une excroissance,
- et l'une parmi la base et l'excroissance définisse une cuvette concave dans laquelle sera engagée une forme extérieurement convexe de l'autre parmi l'excroissance et la base.

Ainsi, on assurera à la fois une retenue en translation et l'articulation.

Et, pour faciliter la réalisation monobloc et solide de la base de l'élément de joint, on conseille que celle-ci présente une forme extérieurement convexe engagée alors de façon mobile dans une cuvette concave de la tête de pale.

A nouveau structurellement, on préférera par ailleurs que ladite cuvette concave présente une ouverture où sera engagée la forme extérieurement convexe, les bords de l'ouverture définissant des butées pour la mobilité de l'élément de joint externe par rapport à la tête de pale.

Quant à l'ensemble tournant pour turbomachine également ici concerné, il est recommandé qu'il comprenne :
- un disque de rotor monté tournant autour de l'axe longitudinal du moteur et pouvant présenter en périphérie extérieure des rainures,
- une série d'aubes de rotor du type de celles précitées fixées chacune au du disque de rotor, - et un carter fixe pourvu de blocs de contact, par exemple en matériau abradable, entourant les éléments de joint des aubes, ces éléments étant mobiles par rapport aux blocs contact, sans nécessairement fléchir.

En conformité avec la mobilité élément de joint/tête de pale souhaitée, il est par ailleurs prévu que, sur chaque aube de rotor, le ou chaque élément de joint soit de préférence mobile par rapport à la tête de pale au moins suivant un axe sensiblement transversal à l'axe autour duquel le disque de rotor est monté tournant.

Concernant le procédé de fonctionnement de cet ensemble tournant auquel se rapporte par ailleurs un aspect de l'invention, il est favorablement prévu que lesdits éléments de joint mobiles viennent tous au contact des blocs de contact, uniquement à partir d'une vitesse prédéterminée de rotation des aubes.

Par ailleurs, en complément ou non à ceci, il sera favorablement prévu que lesdits éléments de joint mobiles s'inclinent, sans fléchir nécessairement, de façon variable par rapport aux blocs de contact,
- en fonction d'au moins l'un parmi la vitesse de rotation des aubes, la température de l'une au moins desdites aubes, et le refroidissement du carter auquel les blocs sont fixés intérieurement,
- et/ou en fonction de l'usure du matériau abradable, lequel sera moins dur que celui des éléments de joint.

Quant à la manière de réaliser une aube de rotor du type précité, il est conseillé dans la présente demande :
- de réaliser cette aube de rotor, en orientant la cuvette concave transversalement par rapport à un axe longitudinal de l'aube,
- de réaliser à part chaque élément de joint d'étanchéité,
- puis d'engager ensemble, par glissement, la cuvette concave et la forme extérieurement convexe.

Ce coulissement sera favorablement libre, de sorte que la retenue pour le blocage final sera obtenue de préférence par butée contre les aubes adjacentes.

L'invention sera éventuellement mieux comprise et d'autres détails, caractéristiques et avantages de la présente invention pourront apparaître encore plus clairement à la lecture de la description qui suit, faite à titre d'exemple non limitatif et en référence aux dessins annexés, dans lesquels :
- les figures 1,2,3 relatives à l'art antérieur sont donc respectivement une demi vue schématique en coupe axiale d'une turbine basse pression, une vue en perspective d'aubes engagées, chacune par leur extrémité inférieure fixe, dans les alvéoles d'un des disques de rotor et une vue de face d'un joint brosse présenté dans EP0708227;
- la figure 4 est une coupe schématique partielle axiale du sommet d'une aube conforme à l'invention, avec en face la partie concernée du carter fixe d'une turbine basse pression alors au repos ;
- la figure 5 est une perspective schématique partielle de la même zone que celle de la figure 4, turbine tournant ;
- les figures 6,7 sont ded vues identiques à la figure 4, mais avec la turbine tournant respectivement à vitesse intermédiaire et à vitesse la plus élevée ;
- et la figure 8 est une alternative de réalisation.

Selon l'invention, et comme expliqué ci-avant, la solution ici exposée passe donc par le remplacement du joint brosse du mode de réalisation des figures 1,3 par une autre solution qui notamment n'impose pas la réalisation des aubes chacune en matériau composite du type de celui de EP0708227.

La figure 4 et les suivantes schématisent de possibles réalisations d'une telle solution. Les éléments identiques à ceux des figures précédentes y sont identiquement référencés, tandis que les parties toujours existantes, mais modifiées, des aubes portent une référence incrémentée d'une centaine. Ainsi, les aubes 13 deviennent 130, lesquelles peuvent prendre la place des premières sur la figure 1 et être chacune conçues comme schématisé figure 2, pour leur partie intérieure.

Outre qu'elle peut être métallique, par exemple forgée ou moulée, chaque aube de rotor 130, qui tourne bien entendu autour de l'axe 7, comprend un corps 170 définissant localement une pale 190 pourvue à une extrémité radialement externe d'une tête de pale 33, c'est-à-dire d'une partie extrême adaptée à être pourvu (de façon monobloc ou rapportée) d'au moins un élément de joint 39.

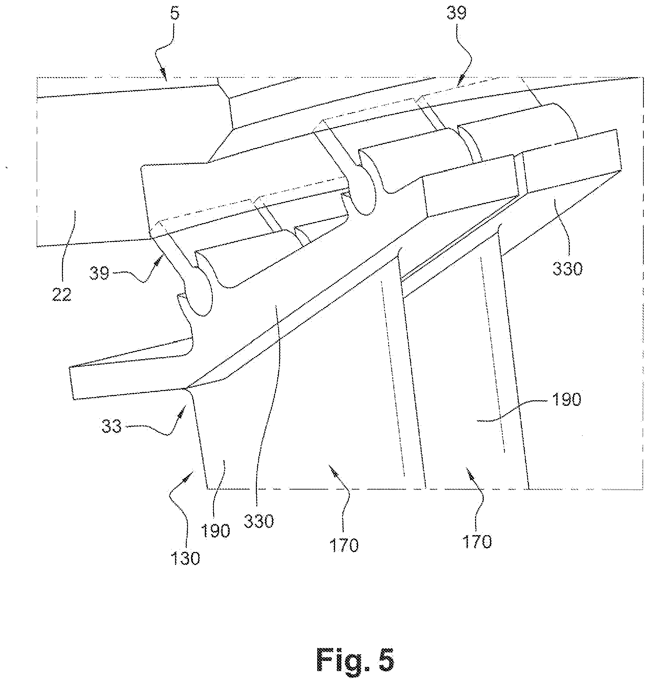

De préférence, chaque tête de pale 33 sera définie par ou comprendra un talon 330 dont on voit une illustration possible en particulier sur la figure 5.

Il s'agit donc d'une petite plateforme qui définit un rebord en extrémité radialement externe de la pale considérée.

De façon classique, l'ensemble de ces talons 330 forme une couronne autour des pales rayonnantes 190 et canalise extérieurement la veine annulaire d'écoulement 27.

Dans la description qui suit, il a été considéré, en liaison avec le mode de réalisation illustré figures 4-7 et à titre non limitatif, qu'un tel talon est présent sur chaque pale.

Ainsi, au-delà de l'extrémité radialement externe de son talon, chaque aube 130 comprend au moins un, ici deux, élément(s) d'étanchéité, dits éléments de joint 39 s'étendant de façon que l'extrémité libre de élément de joint externe considéré puisse s'éloigner plus ou moins du talon, radialement vers l'extérieur, comme on le constate en comparant les figures 4,6,7.

Plus précisément, cette capacité est ici assurée par au moins une, ici deux, liaison(s) mécanique(s) mobile(s) 37 établie entre au moins une, ici deux, zone(s) 35 du talon et le ou les élément(s) de joint 39.

Ainsi, par variation de position, en particulier radiale, du(des) élément(s) de joint 39 via leur(s) liaison(s) mécanique(s) mobile(s) 37, il va être possible d'adapter l'étanchéité périphérique entre chaque talon 330 et la piste du carter, ou enveloppe, en regard, définie dans l'exemple privilégié par le bloc considéré en matériau abradable 22.

Le problème de la prévision de l'usure entre les deux parties en contact et de la maintenance sera en outre d'autant moins présent si, comme illustré, chaque liaison mécanique mobile 37 comprend une articulation permettant, par pivotement, un escamotage de l'élément de joint 39 concerné, en cas d'effort excessif.

Dans le mode de réalisation privilégié des figures 4-6, chaque liaison mécanique mobile 37 comprend de fait une liaison pivot, chacune montée tournante autour d'un axe, respectivement 41a,41b, sensiblement transversal à l'axe 7.

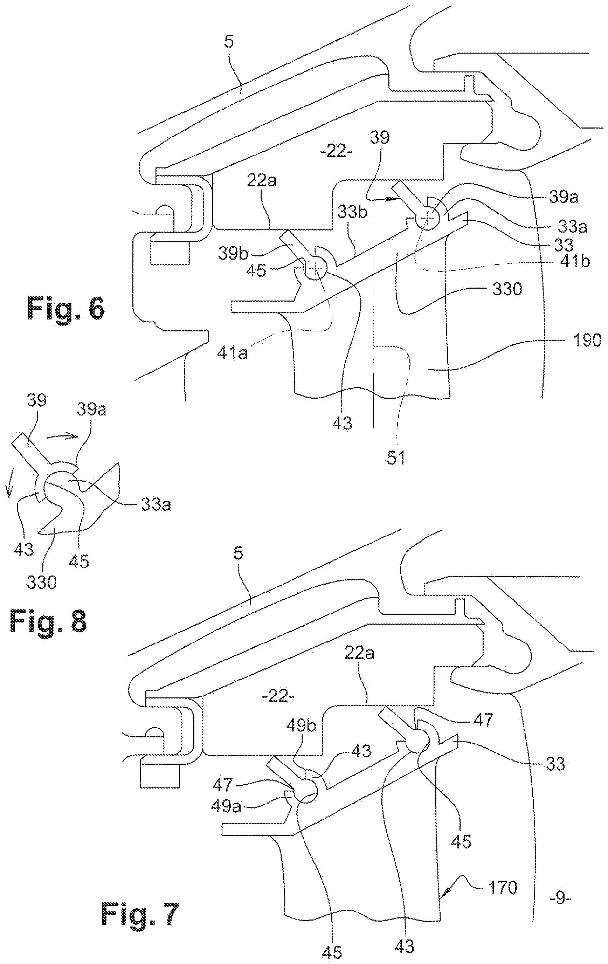

Pour par ailleurs réaliser structurellement la ou chaque liaison mécanique mobile, il est en particulier proposé, comme schématisé figures 6 et 8 :
- que l'élément de joint 39 présente une base 39a et le talon 330 une excroissance 33a, sur sa face externe 33b,
- et que l'une parmi la base et l'excroissance définisse une cuvette concave 43 dans laquelle est engagée une forme extérieurement convexe 45 de l'autre parmi l'excroissance et la base.

Cela étant, pour à nouveau une bonne résistance mécanique et des facilités de fabrication et de maintenance, il est recommandé que chaque élément de joint 39 présente plutôt, comme dans les réalisations des figures 4-7, une base 39a de forme extérieurement convexe engagée de façon mobile dans une cuvette 43 concave du talon 330.

Radialement vers l'extérieur, chaque base 39a sera de préférence prolongée par une partie en forme de lame 39b adaptée à venir à son extrémité libre en appui par un secteur de cercle contre la face 22a en regard de la piste qui la jouxte, et qui appartient dans l'exemple privilégié au bloc 22 concerné.

Pour favoriser les mouvements d'articulation, ou plus généralement pour la mobilité de l'élément de joint externe 39 par rapport au talon 330, on préfèrera que la cuvette concave 43 correspondante présente une ouverture 47 où est engagée la forme extérieurement convexe 45 prévue.

Les bords de chaque ouverture 47 peuvent définir latéralement des butées, telles 49a,49b figure 6 d'arrêt de fin de course de l'élément de joint externe 39 par rapport au talon 330.

Comme illustré figures 4-6, chaque talon 330 d'aube de rotor 130 comprendra de préférence deux éléments de joint externes 39, l'un amont l'autre aval, formant ainsi un double obstacle.

Afin de combiner légèreté, résistance mécanique, facilité de fabrication et de maintenance, il est par ailleurs conseillé que chaque élément de joint 39 soit en matériau composite, tel que du composite à matrice céramique, CMC.

Notamment une telle solution permettra, par opposition à la solution précitée à brosse 21 de l'art antérieur, que les éléments de joint 39 soient mobiles par rapport aux blocs 22 de matériau abradable, sans nécessairement fléchir, la mobilité précitée évitant d'avoir à faire fléchir.

Au repos comme figure 4, les éléments de joint 39 illustrés sont, par gravité, en appui contre l'une de leurs butées 49a,49b.

Par contre, rotor tournant, l'élément de joint 39 correspondant se dresse davantage radialement comme montré figures 6,7.

La butée aval 49b peut d'ailleurs être située de sorte que l'élément de joint 39 correspondant ne puisse aller au-delà de la direction radiale 51, afin qu'il fasse ainsi toujours obstacle à la circulation des gaz d'amont vers l'aval dans cette zone, rotor tournant.

Dans le cadre de ce fonctionnement, il est d'ailleurs prévu que, de préférence, lesdits éléments de joint 39 mobiles s'inclinent par rapport au corps 170, et en particulier au talon 330 concerné, à nouveau sans nécessairement fléchir, et surtout de façon variable par rapport aux blocs 22 de matériau abradable considérés, en fonction de la vitesse de rotation des aubes 130.

A ce sujet, on voit figures 5,6 que, par rapport à la position au repos de la figure 4, les éléments de joint 39 mobiles, alors en position position active, sont davantage inclinés vers l'extérieur et axe radial 51 lorsque la turbine tourne à vitesse intermédiaire (figure 6) que lorsqu'elle tourne à vitesse plus élevée (figure 7), et notamment à plein régime nominal (les blocs d'étanchéité 22 étant supposés en bon état). Ceci est dû aux dilatations différentielles qui se produisent et au rapprochement radial qui s'opère alors entre les talons 33 et les blocs d'étanchéité 22. A noter également que la distance séparant les têtes de pales et l'anneau d'abradable correspondant, défini donc par l'ensemble circonférentiel des blocs 22, dépendra de la vitesse de rotation des aubes, mais aussi d'autres conditions de fonctionnement comme la puissance demandée au moteur, via une injection plus ou moins importante de carburant, et/ou le temps passé à charge élevée et/ou à vitesse élevée de rotation de la turbine.

Ainsi, la distance ci-dessus est plus courte sur la figure 7 que sur la figure 6 et en conséquence les éléments de joint 39 mobiles sont plus inclinés vers la direction radiale 51 figure 6 que figure 7.

Il est aussi prévu que les mêmes éléments de joint mobiles 39 s'inclineront, là encore sans nécessairement fléchir, de façon variable par rapport aux blocs d'étanchéité 22, en fonction de l'usure du matériau abradable. De ce fait une butée aval 49b située de sorte que l'élément de joint 39 correspondant ne puisse aller au-delà de la direction radiale 51 présentera tout son intérêt.

En alternative à la réalisation des figures 4-7, la figure 8 montre une solution (non préférée) où :
- l'élément de joint 39 présente une base 39a et le talon 330 une excroissance 33a, sur sa face externe 33b,
- et la base définit une cuvette concave 43 dans laquelle est engagée la forme extérieurement convexe 45 de l'excroissance 33a du talon.

Concernant maintenant le montage des éléments de joint d'étanchéité 39 articulés, il s'effectuera, en particulier pour la liaison à pivot illustrée, par coulissement (axe 41a,41b) avec emmanchement de chaque élément de joint, en respectant le léger jeu nécessaire au pivotement (libre pivotement de préférence), comme dans le cas un montage queue d'aronde. La retenue pour le blocage à coulissement sera de préférence effectuée par butées de l'élément de joint considéré contre les aubes adjacentes, comme on le comprend au vu de la figure 5.

Quant à l'abradable que peut comprendre chaque bloc de contact 22, il sera préférentiellement en matériau moins dur que le matériau des éléments de joint d'étanchéité 39. Ces derniers pourront être en composite à matrice céramique, CMC, avec les mêmes avantages que ceux précités.

## Revendications

1. Aube de rotor pour une turbomachine, comprenant un corps (170) définissant localement une pale présentant à une extrémité radialement externe une tête de pale (33,330), et au moins un élément de joint d'étanchéité (39) lié avec une zone de la tête de pale (33,330) par une liaison mécanique (37) mobile entre une position de repos et une position active dans laquelle l'élément de joint (39) fait radialement saillie de la tête de pale (33,330), **caractérisée en ce que** la liaison mécanique mobile (37) comprend une articulation.

2. Aube de rotor selon la revendication 1, dans laquelle la tête de pale (33,330) définit un talon (330).

3. Aube de rotor selon la revendication 1 ou 2, dans laquelle la liaison mécanique mobile (37) comprend une liaison pivot, en tant qu'articulation.

4. Aube de rotor selon l'une des revendications 1 à 3, dans laquelle, pour la liaison mécanique mobile :
- l'élément de joint (39) présente une base (39a) et la tête de pale (33,330) une excroissance (33a),
- et l'une parmi la base et l'excroissance définit une cuvette concave (43) dans laquelle est engagée une forme extérieurement convexe (45) de l'autre parmi l'excroissance et la base.

5. Aube de rotor selon l'une des revendications 1 à 4, dans laquelle l'élément de joint (39) présente une base (39a) de forme extérieurement convexe engagée de façon mobile dans une cuvette concave (43) de la tête de pale (33,330).

6. Aube de rotor selon l'une des revendications 4 ou 5, dans laquelle ladite cuvette concave (43) présente une ouverture (47) où est engagée la forme extérieurement convexe, les bords de l'ouverture définissant des butées (49a,49b) pour la mobilité de l'élément de joint externe (39) par rapport à la tête de pale (33,330).

7. Ensemble tournant pour une turbomachine, comprenant :
- un disque de rotor (11) monté tournant autour d'un axe (7),
- une série d'aubes de rotor (130) selon l'une des revendications 1 à 6, fixées chacune au disque de rotor,
- un carter fixe (5) pourvu de blocs (22) de contact avec les éléments de joint (39) des aubes de rotor que lesdits blocs entourent, les éléments de joint (39) étant ainsi mobiles par rapport auxdits blocs de contact.

8. Ensemble selon la revendication 7, dans lequel, sur chaque aube de rotor, le ou chaque élément de joint (39) est monté libre en mouvement de manière qu'une mise en rotation des aubes (130) par le disque de rotor (11) fasse bouger l'élément de joint (39) vers la position active.

9. Procédé de fonctionnement d'un ensemble tournant pour une turbomachine selon la revendication 7 ou 8, dans lequel :
- lesdits éléments de joint (39) mobiles des aubes de rotor (130) viennent tous au contact des blocs (22) de contact, uniquement à partir d'une vitesse prédéterminée de rotation des aubes, et/ou
- lesdits éléments de joint (39) mobiles des aubes de rotor (130) s'inclinent, sans nécessairement fléchir, de façon variable par rapport aux blocs (22) de contact, en fonction de la vitesse de rotation des aubes.

10. Procédé de fonctionnement d'un ensemble tournant pour une turbomachine selon la revendication 7 ou 8, dans lequel lesdits éléments de joint (39) mobiles des aubes de rotor (130) s'inclinent, sans nécessairement fléchir, de façon variable par rapport aux blocs (22) de contact, en fonction d'au moins l'un parmi la vitesse de rotation des aubes, la température de l'une au moins desdites aubes, et le refroidissement du carter (5) auquel les blocs (22) sont fixés intérieurement.

11. Procédé de réalisation d'une aube de rotor pour une turbomachine, selon la revendication 4 seule ou en combinaison, avec l'une des revendications 5,6, dans lequel :
- on réalise l'aube de rotor (130), en orientant la cuvette concave (43) transversalement par rapport à un axe longitudinal (31) de l'aube,
- on réalise le(s) élément de joint d'étanchéité (39),
- et on engage ensemble par glissement la cuvette concave (43) et la forme extérieurement convexe (45).

## Patentansprüche

1. Laufschaufel für eine Turbomaschine, enthaltend einen Körper (170), der bereichsweise ein Schaufelblatt definiert, das an einem radial ausseren Ende einen Schaufelblattkopf (33, 330) aufweist, sowie zumindest ein Dichtungselement (39), das mit einem Bereich des Schaufelblattkopfes (33, 330) über eine mechanische Verbindung (37) verbunden ist, die zwischen einer Ruheposition und einer Wirkposition bewegbar ist, in welcher das Dichtungselement (39) radial von dem Schaufelblattkopf (33, 330) vorspringt, **dadurch gekennzeichnet, dass** die verstellbare mechanische Verbindung (37) ein Gelenk umfasst.

2. Laufschaufel nach Anspruch 1, wobei der Schaufelblattkopf (33, 330) einen Absatz (330) definiert.

3. Laufschaufel nach Anspruch 1 oder 2, wobei die verstellbare mechanische Verbindung (37) eine Schwenkverbindung als Gelenk umfasst.

4. Laufschaufel nach einem der Ansprüche 1 bis 3, wobei bei der verstellbaren mechanischen Verbindung
- das Dichtungselement (39) ein Basisteil (39a) und der Schaufelblattkopf (33, 330) eine Ausstülpung (33a) enthält,
- und eines aus Basisteil und Ausstülpung eine konkave Mulde (43) definiert, in welche eine außen konvexe Form (45) des jeweils anderen aus Ausstülpung und Basisteil eingreift.

5. Laufschaufel nach einem der Ansprüche 1 bis 4, wobei das Dichtungselement (39) ein Basisteil (39a) mit außen konvexer Form aufweist, das bewegbar in eine konkave Mulde (43) des Schaufelblattkopfes (33, 330) eingreift.

6. Laufschaufel nach einem der Ansprüche 4 oder 5, wobei die konkave Mulde (43) eine Öffnung (47) aufweist, in welche die außen konvexe Form eingreift, wobei die Ränder der Öffnung Anschläge (49a, 49b) für die beweglichkeit des äußeren Dichtungselements (39) bezüglich des Schaufelblattkopfes (33, 330) definieren.

7. Drehanordnung für eine Turbomaschine, enthaltend:
- eine Rotorscheibe (11), die um eine Achse (7) drehbar gelagert ist,
- eine Reihe von Laufschaufeln (130) nach einem der Anspruche 1 bis 6, die jeweils an die Rotorscheibe befestigt sind,
- ein festes Gehäuse (5), das mit Kontaktblöcken (22) zum Kontakt mit den Dichtungselementen (39) der Laufscheiben, welche die von den Blöcken umgeben werden, versehen ist, wobei die Dichtungselemente (39) somit gegenüber den Kontaktblöcken bewegbar sind.

8. Anordnung nach Anspruch 7, wobei an jeder Laufschaufel das bzw. jedes Dichtungselement (38) frei bewegbar gelagert ist, so dass ein Verdrehen der Schaufeln (130) über die Rotorscheibe (11) das Dichtungselement (39) in die Wirkposition verlagert.

9. Verfahren zum Betreiben einer Drehanordnung für eine Turbomaschine nach Anspruch 7 oder 8, wobei
- die bewegbaren Dichtungselemente (39) der Laufschaufeln (130) alle erst ab einer vorbestimmten Drehgeschwindigkeit der Schaufeln mit den Kontaktblöcken (22) in Kontakt gelangen, und/oder
- die verstellbaren Dichtungselemente (39) der Laufschaufeln (130) sich in Abhängigkeit von der Drehgeschwindigkeit der Schaufeln variabel in Bezug auf die Kontaktblöcke (22) geneigt verlaufen, ohne sich dabei notwendigerweise durchzubiegen.

10. Verfahren zum Betreiben einer Drehanordnung für eine Turbomaschine nach Anspruch 7 oder 8, wobei die bewegbaren Dichtungselemente (39) der Laufschaufeln (130) sich in Abhängigkeit von zumindest einem aus Drehgeschwindigkeit der Schaufeln, Temperatur zumindest einer der Schaufeln und Abkühlung des Gehäuses (5), an das die Blöcke (22) innen befestigt sind, variabel in Bezug auf die Kontaktblöcke (22) geneigt verlaufen, ohne sich dabei notwendigerweise durchzubiegen.

11. Verfahren zum Herstellen einer Laufschaufel für eine Turbomaschine nach Anspruch 4 allein oder in Kombination mit einem der Ansprüche 5, 6, wobei:
- die Laufschaufel (130) hergestellt wird, indem die konkave Mulde (43) quer zu einer Längsachse (31) der Schaufel ausgerichtet wird,
- das bzw. die Dichtungselemente (39) ausgebildet werden,
- und die konkave Mulde (43) und die außen konvexe Form (45) zusammengeschoben werden.

## Claims

1. A rotor vane for a turbine engine, comprising a body (170) locally defining a blade provided at the radially outer end with a blade tip (33, 330), and at least one sealing element (39) connected with an area of the blade tip (33, 330) by means of a mechanical link (37) which can move between a rest position and an active position, wherein the sealing element (39) radially protrudes from the blade tip (33, 330), **characterised in that** the movable mechanical link (37) comprises an articulation.

2. A rotor vane according to claim 1, wherein the blade tip (33, 330) defines a root (330).

3. A rotor vane according to claim 1 or 2, wherein the movable mechanical link (37) comprises a pivot joint, as said articulation.

4. A rotor vane according to one of claims 1 to 3, wherein for the movable mechanical link:
- the sealing element (39) has a base (39a) and the blade tip (33, 330) has a protrusion (33a),
- and one of the base and the protrusion defines a concave bowl (43) in which an externally convex shape (45) of the other one of the protrusion and the base is engaged.

5. A rotor vane according to one of claims 1 to 4, wherein the sealing element (39) has a base (39a) having an externally convex shape movably engaged in a concave bowl (43) of the blade tip (33, 330).

6. A rotor vane according to one of claims 4 or 5, wherein said concave bowl (43) has an opening (47) wherein the externally convex shape is engaged, with the edges of the opening defining abutments (49a, 49b) for the mobility of the external sealing element (39) relative to the blade tip (33, 330).

7. A rotary assembly for a turbine engine comprising:
- a rotor disc (11) rotatably mounted about an axis (7),
- a series of rotor vanes (130) according to one of claims 1 to 6, each fixed to the rotor disc,
- a fixed casing (5) provided with blocks (22) for the contact with the sealing elements (39) of the rotor vanes surrounded by said blocks, with the sealing elements (39) thus being movable relative to said contact blocks.

8. An assembly according to claim 7, wherein on each rotor vane, the or each sealing element (39) is so mounted as to move freely so that the rotor disc (11) rotating the vanes (130) moves the sealing elements (39) towards the active position.

9. A method for operating a rotary assembly for a turbine engine according to claim 7 or 8, wherein:
- said moving sealing elements (39) of the rotor vanes (130) all come into contact with the contact blocks (22) only from a predetermined rotation speed of the vanes and/or
- said moving sealing elements (39) of the rotor vanes (130) are variably inclined, without necessarily flexing relative to the contact blocks (22), depending on the rotation speed of the vanes.

10. A method for operating a rotary assembly for a turbine engine according to claim 7 or 8, wherein said moving sealing elements (39) of the rotor vanes (130) are variably inclined, without necessarily flexing, relative to the contact blocks (22), according to at least one from the rotation speed of the vanes, the temperature of at least one of said vanes, and the cooling of the casing (5) to which the blocks (22) are internally fixed to.

11. A method for producing a rotor vane for a turbine engine according to claim 4 alone or in combination with one of claims 5, 6, wherein:
- the rotor vane (130) is provided by orienting the concave bowl (43) transversely to a longitudinal axis (31) of the vane,
- the sealing element (s) (39) is/are achieved,
- and the concave bowl (43) and the externally convex shape (45) are engaged together by sliding.
